# EUROPEAN PATENT SPECIFICATION

(11) **EP 1 693 256 B1**
(45) Date of publication and mention of the grant of the patent: **13.08.2008**
(21) Application number: 06003585.4
(22) Date of filing: 22.02.2006
(51) Int. Cl.: B60R 21/16

(54) **Airbag cushion**
Gassack für einen Airbag
Coussin pour airbag

(30) Priority: 22.02.2005 US 655014
(43) Date of publication of application: 23.08.2006
(73) Proprietor: TAKATA CORPORATION, Minato-ku, Tokyo 106-8510 (JP)
(72) Inventor: Kumagai, Masayoshi, Minato-ku Tokyo 106-8510 (JP)
(74) Representative: Banzer, Hans-Jörg

(56) References cited:
- EP-A- 1 428 729
- US-A1- 2003 173 762
- US-A1- 2004 155 440
- US-B1- 6 189 928
- US-B1- 6 250 677
- US-B1- 6 315 323

## Description

### BACKGROUND

The present invention relates to an airbag device in which an airbag is inflated to protect a vehicle occupant in the event of a vehicle collision. More particularly, an airbag device with an improved airbag configuration for protecting an occupant more efficiently.

An airbag for protecting a vehicle occupant is normally stored in a folded state in a cavity disposed in the middle section of a steering wheel or within an instrument panel of a vehicle. In the event of a vehicle collision, the airbag is deployed and inflated in the vehicle interior by gas produced by an inflator. The inflated airbag receives and restrains the occupant.

In conventional airbag devices, the airbag when deployed does not leave a sufficiently safe distance between the airbag contact surface and the vehicle occupant. Thus, in a vehicle emergency the kinetic energy of the occupant is not efficiently absorbed by the airbag, which may result in injury to the occupant. In addition, when the occupant has a small build, the seat is often pulled forward to the front-most position. Such an occupant is plunged into a conventional airbag before the seatbelt has sufficient time to absorb impact energy. As a result, some passengers, especially children, have been fatally injured.

Another disadvantage of conventional airbags is that the restraint force of the airbag is not focused on the mass point of the occupant's head. Thus, the kinetic energy of the occupant's head is not efficiently absorbed.

Because the energy absorption effect of conventional airbags is not optimized, such airbags require increased volume and an inflator with increased output.

In document US 2004/0155440 A1, an airbag according to the preamble of claim 1 is disclosed.

In document US 6,315,323 B1, an airbag is disclosed wherein tethers are provided which, with one end, are connected with an upper side portion, a lower side portion, an inner side portion and an outer side portion of the airbag, respectively, and with their other ends are connected with respective tether winding devices.

### SUMMARY

The present invention provides an airbag device as defined in claim 1. The dependent claims define embodiments of the airbag device and a vehicle safety system incorporating the airbag device.

According to the present invention, an airbag device is provided, comprising: an airbag including first and second chambers , a recess formed in an exterior surface of the airbag between the first and second chambers, a tether connected to the airbag, and a winding device connected to the tether, wherein the winding device is arranged to control the size and shape of the airbag when the airbag is in a deployed state, wherein the tether includes first and second members, wherein the first member is connected in the first chamber and the second member is connected in the second chamber thereof.

### BRIEF DESCRIPTION OF THE DRAWINGS

These and other features, aspects, and advantages of the present invention will become apparent from the following description, appended claims, and the accompanying exemplary embodiments shown in the drawings, which are described briefly below.
Figure 1(a) is a schematic top view of a front-passenger airbag device in the fully deployed state which is not an embodiment.
Figure 1(b) is a schematic side view of the airbag device of Fig. 1(a).
Figure 2(a) is a schematic top view of a front-passenger airbag device which is not an embodiment showing a state in which the occupant is moving forward.
Figure 2(b) is a schematic top view of the airbag device of Fig. 2(a) showing the moment when the occupant's face comes in contact with the airbag.
Figure 2(c) is a schematic top plan view the airbag device of Fig. 2(a) showing a state in which the occupant is being restrained by the airbag.
Figure 3(a) is a rear view showing an airbag device which is not an embodiment.
Figure 3(b) is a schematic side view of a left half of the airbag device of Fig. 3(a).
Figure 4 is a perspective view of an airbag device which is not an embodiment.
Figure 5 is a perspective view of an airbag device which is not an embodiment.
Figure 6 is a perspective view of an airbag device which is not an embodiment.
Figure 7 is a perspective view of an airbag device which is not an embodiment.
Figure 8 is a schematic top view of an airbag device which is not an embodiment.
Figure 9(a) is a perspective view of an airbag device which is not an embodiment.
Figure 9(b) is a top sectional view of the airbag device of Fig. 9(a).
Figure 10 is a schematic top view of an airbag device which is not an embodiment.
Figure 11 shows a view of an airbag which is not an embodiment with left and right projections.
Figure 12(a) is a top view of an embodiment of the present invention for controlling the shape of an airbag.
Figure 12(b) is a top view of a deployed airbag with a controlled shape according to an embodiment.
Figure 13 is a side view of the airbag device shown in Figure 12(b).
Figure 14(a) is a top view of an embodiment of the present invention for controlling the shape of an airbag.
Figure 14(b) is a top view of a deployed airbag with a controlled shape according to an embodiment.
Figure 14(c) is a top view of a vehicle crash example.
Figure 15 is a side view of an airbag device according to an embodiment of the present invention.
Figure 16 is a top view of an airbag device according to an embodiment.
Figure 17 is a top view of an airbag device according to an embodiment.

### DESCRIPTION

Embodiments will be described with reference to the attached drawings.

In the description below, the longitudinal direction is identical to that of a vehicle in which the head-protecting airbag is mounted. Although the following embodiments are directed to an airbag device for a passenger seat mounted in the upper part of a vehicle dashboard, the airbag device can be applied to an airbag other than for a passenger seat.

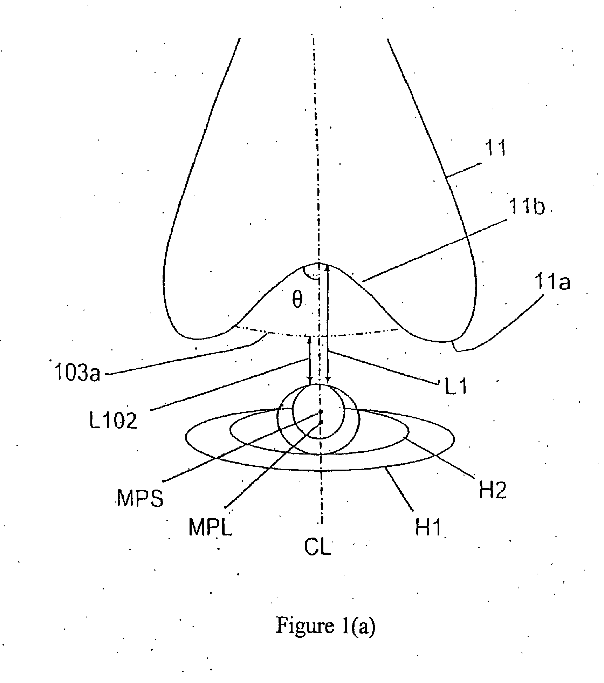

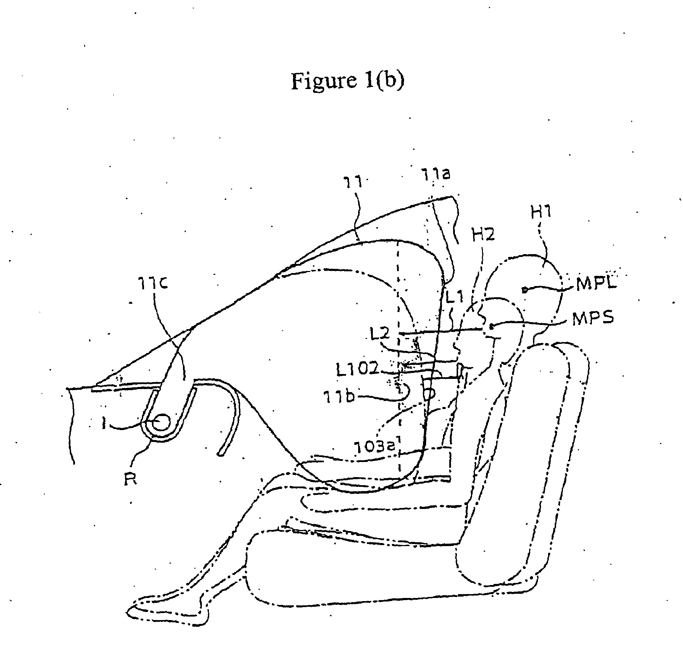

Fig. 1(a) is a schematic top view showing a front-passenger airbag device in the fully deployed state which is not an embodiment. Fig. 1(b) is a schematic side view of the airbag device in Fig. 1(a). The airbag device has a retainer R disposed facing the windshield above the instrument panel of a vehicle. Arranged in the retainer R are an airbag 11 preferably made of fabric and an inflator I for supplying gas into the airbag for deployment of the airbag. The airbag 11 can be stored inside the retainer R in a folded state. The volume of the airbag 11 can be in a range of approximately 110 to 132 liters when the airbag 11 is of a small size. The base of the airbag 11 can include a narrow end opening (gas inlet) 11 c, which is connected to the inflator 1. The end opening 11c allows the flow of gas from the inflator I into the airbag 11. The front face of the airbag 11 has a contact surface 11 a, which comes in contact with the occupant when the airbag deploys.

A recess 11b is provided in the vicinity of the center area of the contact surface 11 a of the airbag 11. The recess 11b may be in the form of, for example, a constriction, a hollow, or a valley in the airbag. The recess 11b preferably extends from the top of the airbag 11 to the bottom of the airbag 11 so that the recess 11b is visible in a top view of the airbag. In the preferred embodiment, the fully deployed airbag 11 has a configuration in its top view showing a right side portion, a left side portion, and a recess formed between the left side portion and the right side portion.

Figs. 1(a) and 1(b) show two occupants H1, H2 of different builds. The occupant H1 has a larger build than the occupant H2. The distance between the jaw area of the occupant H1 and the recess 11b (center of the contact surface 11a) of the deployed airbag is indicated by L1 . The distance between the jaw area of the occupant H2 and the recess 11b (center of the contact surface 11a) of the deployed airbag is indicated by L2. For example, L1, L2 may be on the order of 100 mm or the like. For comparison, a contact surface 103a of a conventional airbag is also shown. As can be seen, the distance L102 between the contact surface 103a of a conventional airbag and the jaw area of the occupant H2 is less than the distance L2 between the jaw area of the occupant H2 and the center of the contact surface 11a.

Thus, in the airbag device shown in Figs. 1(a) and 1(b), the existence of the recess 11b makes the distance L2 between the occupant H2 and the contact surface 11a not so different from the distance L 1 between the occupant H and the contact surface 11 a. This enables the occupant H2 also to be sufficiently decelerated by the seat belt before the head portion of the occupant H2 comes into contact with the airbag 11.

In Figs. 1 (a) and 1 (b), the mass points (position of center of gravity) of the heads of the occupants H1, H2 are represented by MPL and MPS, respectively. In the airbag device, a front surface of the airbag is formed so that the portions of the heads of the occupants H1, H2 corresponding to the mass points MPL, MPS will come into contact with the front surface area of the airbag extending (or projecting) from the deepest section of the recess I 1b to the right side end (the right contact portion) and from the deepest section of the recess 11b to the left side end (the left contact portion) toward the occupants H1, H2. Thus by projecting the front surface of the airbag in a direction toward the occupant, the occupant can be restrained more safely during the initial stage of the impact than is possible with a conventional airbag.

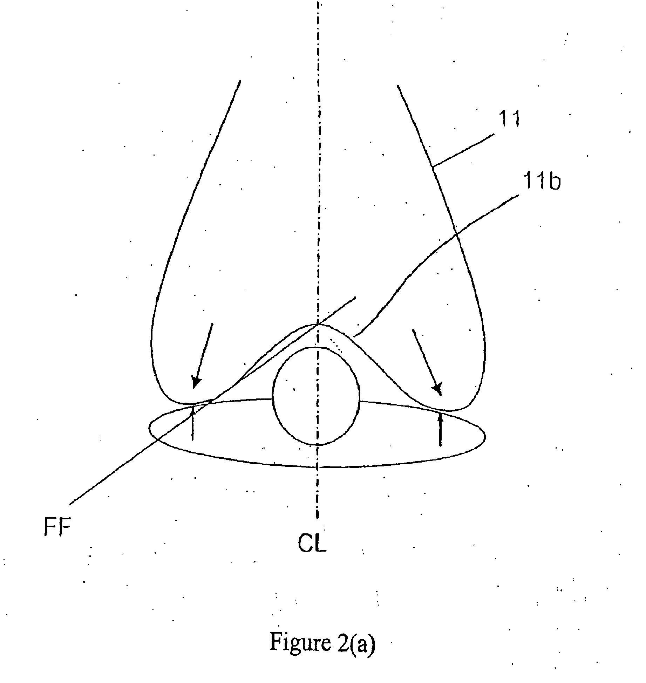

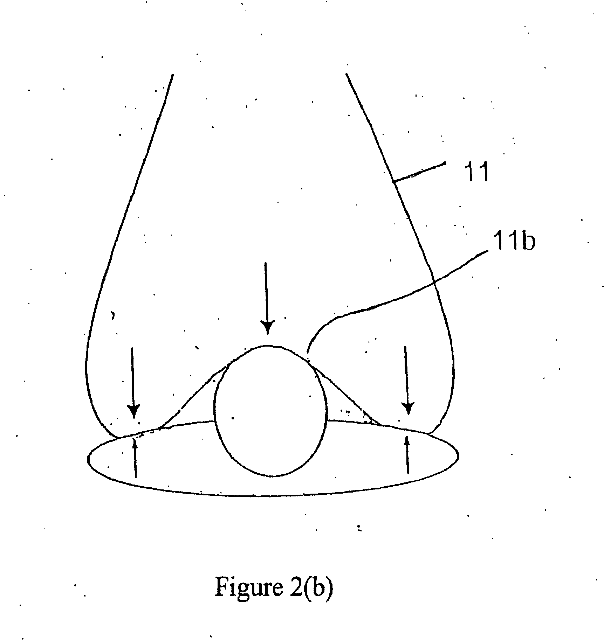

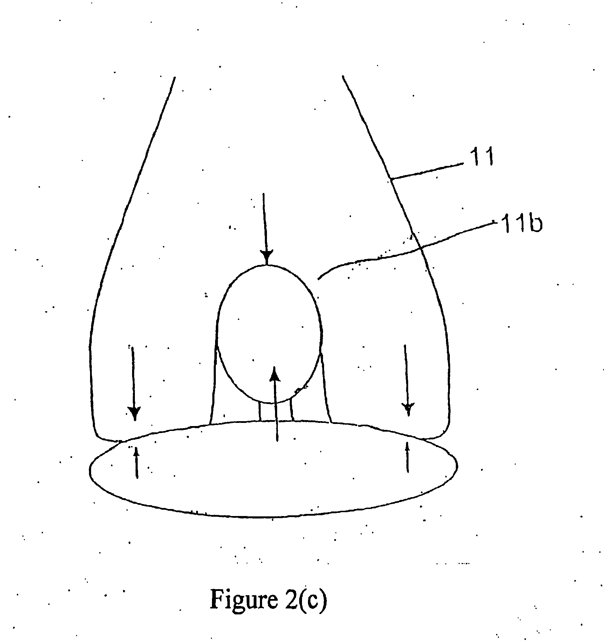

With reference to Fig. 2, additional configurations and functions of an airbag device will now be described. Fig. 2(a) is a schematic top view showing a state where the occupant is moving forward. Fig. 2(b) is a schematic top view showing a state where the occupant's face just comes into contact with the airbag. Finally, Fig. 2(c) is a schematic top view showing a state where the occupant is being restrained by the airbag.

As shown in Fig. 2(a), when an occupant has moved forward, the shoulder portions of the occupant first come into contact with the airbag 11. Inside the airbag 11, bold arrows indicate reactive force (pressure). In this embodiment, a recess 11b restricts the flow of pressure, thereby preventing pressure from escaping from the right and left portions (shoulder/side projections) of the airbag 11 to ensure that the occupant is fully restrained during the initial stage of the impact. Thus, it is necessary to form the airbag so that the recess maintains its recessed shape even when the pressure is applied to the right and left portions of the airbag.

Fig. 2(b) shows a moment when the occupant's face just comes into contact with the airbag. In Fig. 2(b), a line FF extends toward and an occupant from the deepest section of the recess 11b to left side end of the recess I 1b (FFL) and from the deepest section of the recess 11b to the right side end of the recess 11b (FFR). The line FF (FFL, FFR) forms an angle of about 15 to 90 degrees (preferably 30 to 60 degrees) relative to the line CL extending through the deepest section of the recess in the longitudinal direction of the vehicle. In other words, the angle θ is formed at the intersection of the line FF (or the contact surface 11a) and the line CL. In this way, the area of the occupant's head corresponding to the center of gravity MP of the occupant's head (the area between the eyebrows) can be restrained with certainty, and the kinetic energy of the head can be absorbed in a most efficient way.

Fig. 2(c) shows a state where the occupant is fully restrained by the airbag 11. As the occupant further moves forward from the state in Fig. 2(b), the shoulder portions of the occupant push against the right and left side portions of the airbag, thereby compressing the right and left sides of the airbag. Since the shape of the recess 11b is maintained even when the inner pressure of the airbag rises, much of the gas pressure is kept from escaping. Consequently, the reaction force of the right and left sides of the airbag increases, enhancing the initial occupant restraint capability. Thus, gas pressure is effectively supplied to all portions of the airbag, including the recess 11b. As a result, the energy absorption effect of the recess is improved. The stroke of the occupant's head is reduced, the need for boosting the inflator output is eliminated, and the volume of the airbag can be made smaller. In addition, providing the recess 11b allows the occupant to be sufficiently decelerated by the seat belt before the occupant's head plunges into the airbag 11.

Additional modifications of the airbag 11 will now be described. In the following, various methods are employed so that the shape of the recess is maintained even when the right and left sides of the airbag are compressed as shown Fig. 2(a).

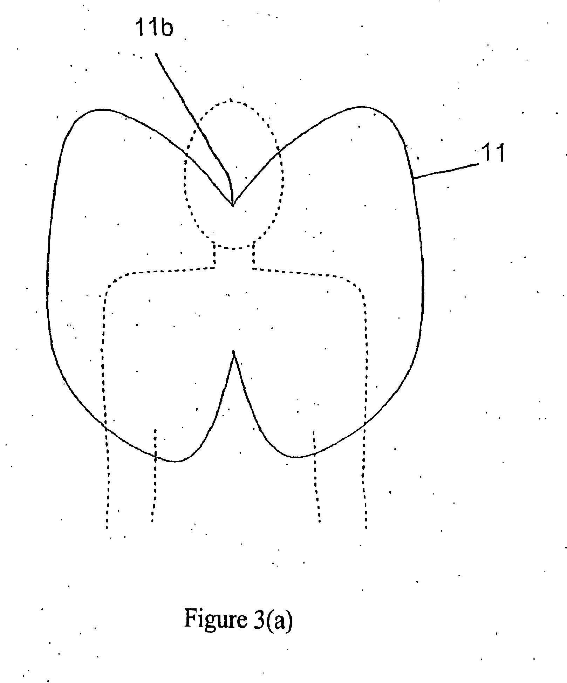

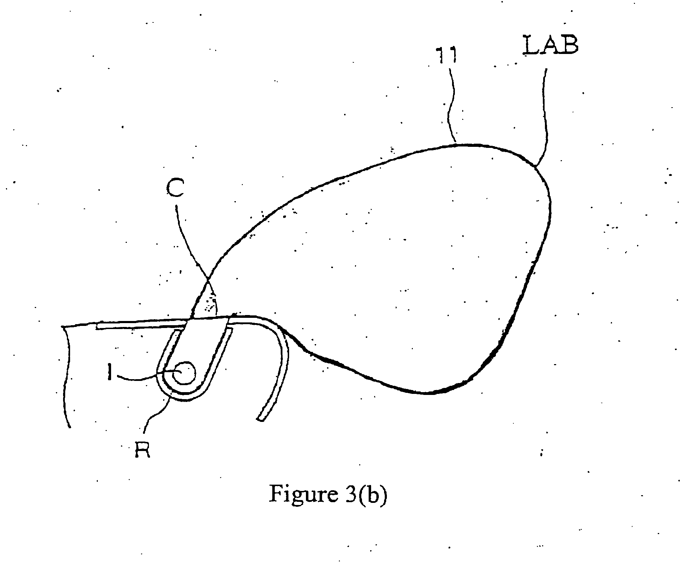

Figs. 3 (a) and 3(b) show another airbag device. Fig. 3(a) shows an airbag 11 when deployed. Fig. 3(b) shows a left half side airbag LAB. The airbag 11 of Fig. 3(a) is formed by connecting two airbags-a right side airbag and a left side airbag-together to form one airbag 11. As shown in Fig. 3(b), an opening I for inserting an inflator is provided at the base of the airbag. As in Figs. 1 (a) and 1(b), the front side of the airbag 11 comprises a contact surface 11 a, which makes contact with an occupant when the airbag deploys. A recess 11b is provided in the center area of the contact surface.

As shown in Fig. 3(b), the left half side airbag LAB and the right half side airbag have a communication portion C, which communicates with one end of the left half side airbag LAB and one end of the right half side airbag. The communication portion C is disposed at the base side of the airbag 11. Therefore, the left half side airbag LAB and the right half side airbag inflate respectively in a direction away from the communication portion C.

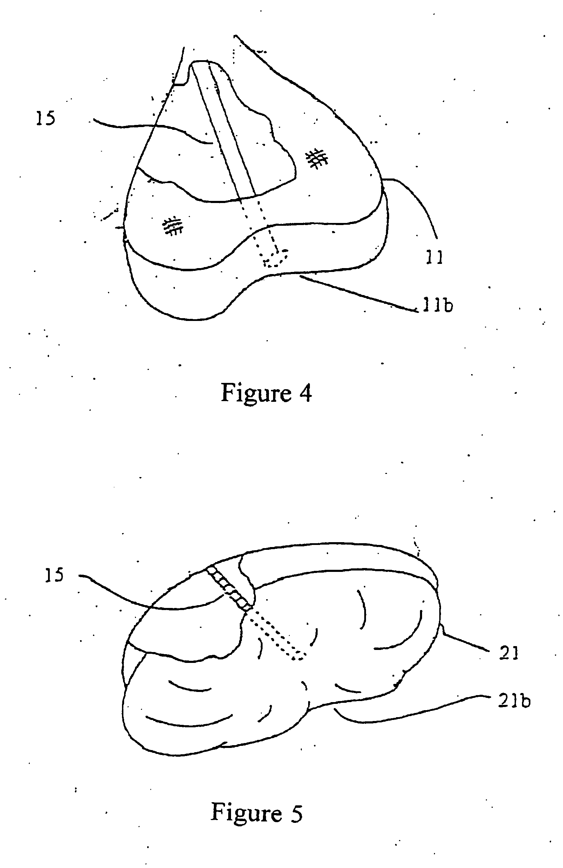

Fig. 4 shows another airbag device in which a tether belt is attached to the recess 11b of an airbag 11. The airbag 11 shown in Fig. 4 is similar to the airbag shown in Fig. 3(a). The one end of the tether belt 15 is sewn to the inner surface of the airbag 11 adjacent to the bottom of the recess 11 b. The other end of the tether belt 15 is sewn to the inner surface of the airbag 11 adjacent to the end opening of the airbag 11. The tether belt 15 is made of a material with an expansion rate lower than that of the airbag 11. The tether belt 15 may, for example, be a string or a band-shaped cloth. By adding a tether belt 15, the shape of the recess 11b can be maintained when the airbag 11 is inflated.

Fig. 5 shows another airbag device in which a tether belt 15 is attached to a conventional airbag 21. Fig. 5 shows a conventional airbag 21 without a recess 11b. One end of the tether belt 15 is sewn to the inner surface of the airbag 21 adjacent to the central area of the airbag facing the occupant. The other end of the tether belt 15 is sewn to the airbag 21 adjacent to the end opening of the airbag. When the airbag 21 inflates, the central area of the airbag facing the occupant is pulled by the tether belt 15 to form a recess 21 b. Since this embodiment can be applied to a conventional airbag, construction of the airbag can be made easy.

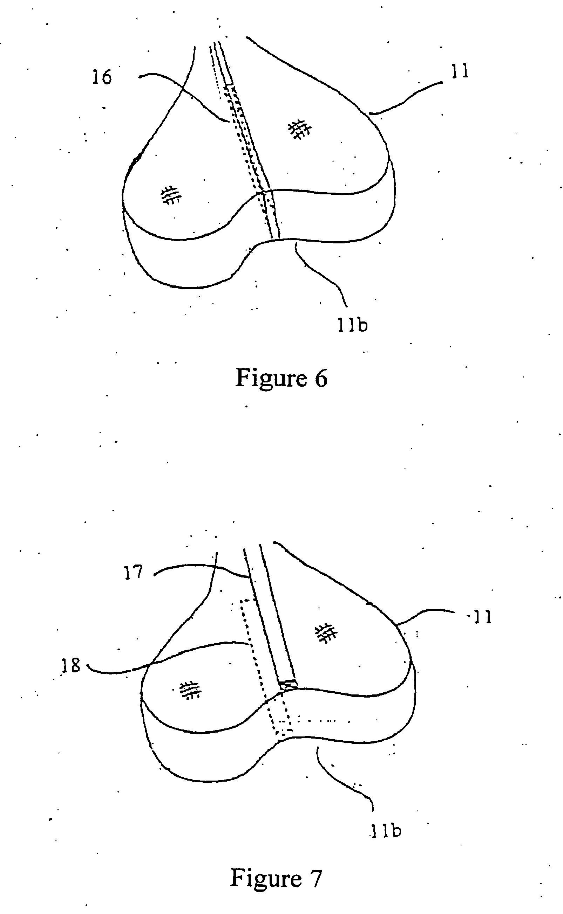

Fig. 6 shows another airbag device in which tether belts 16 are attached to the outside surface of the airbag surrounding the recess 11 b of the airbag 11. The airbag 11 shown in Fig. 6 is similar to the airbag shown in Fig. 3(a). Tether belts 15 are wrapped around the recess 11b of the airbag. Ends of the tether belts are sewn to the airbag adjacent to the end opening of the airbag.

Fig. 7 shows another airbag device in which tether belts 17, 18 are attached to the airbag 11 on the upper and lower surface of the airbag adjacent to the recess 11 b.

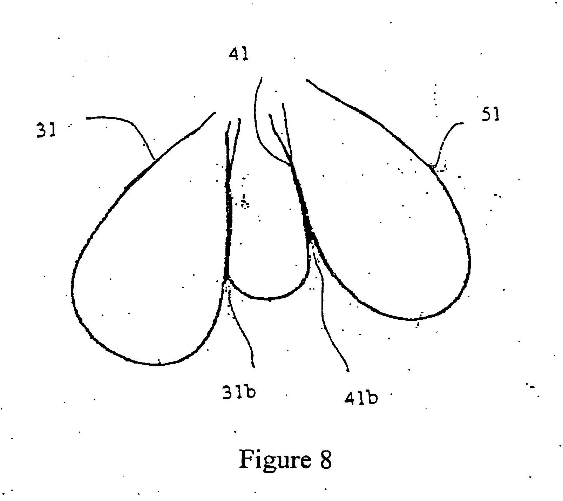

Fig. 8 shows another airbag device in which three airbags 31, 41, 51 are employed. An inflator (not shown) is provided for each of the airbags. As shown in Fig. 8, recesses 31 b, 41b are formed on a front surface formed by the airbags 31, 41, 51.

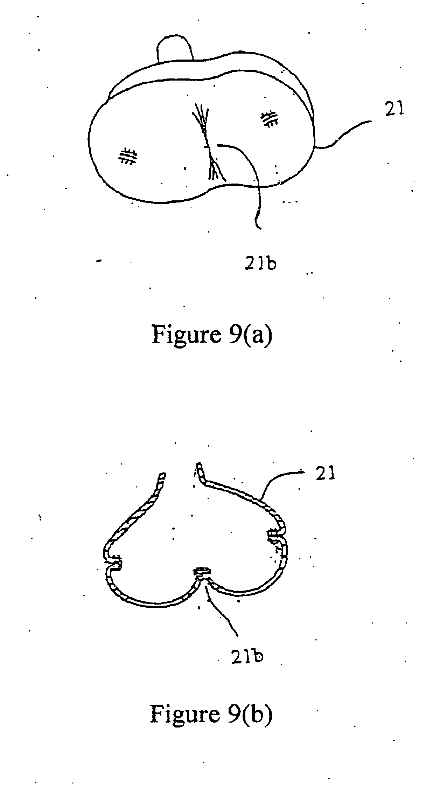

Fig. 9 shows another airbag device. Fig. 9(a) is a perspective view of this airbag device. Fig. 9(b) is a cross sectional view of the embodiment of Fig. 9(a). In this embodiment, a part of a conventional airbag 21 is sewn together and also the periphery of the conventional airbag is sewn together. The sewn parts form a recess 21b in the front of the airbag 21.

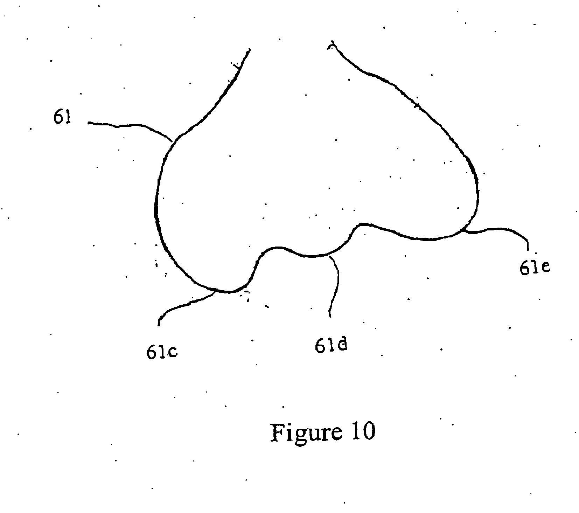

Fig. 10 shows another airbag device in which the airbag 61 has three projecting portions 61c, 61d, 61e. To construct this airbag, ariy of the methods used to produce the above embodiments can be used. Thus, the number of projecting portions of the airbag can be increased to three.

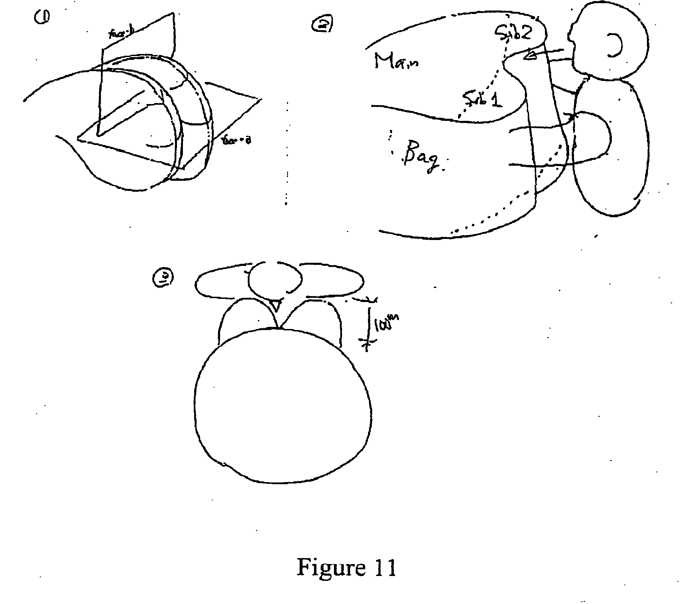

Fig. 11 shows another airbag device. In this case, the airbag has a left and a right projection on the front of an airbag that faces an occupant. A horizontal distance from the distal ends of the left and right projections to a deepest part of the space between the left and right projections is about 25 mm to about 1000 mm. Preferably, the horizontal distance from the distal ends to a deepest part is about 50 mm to about 750 mm. More preferably, the horizontal distance from the distal ends to a deepest part is about 75 mm to about 600 mm. More preferably, the horizontal distance from the distal ends to a deepest part is about 100 mm to about 480 mm. In one embodiment the airbag has a recess for an occupant's head on the occupant's side of the airbag. In one embodiment the airbag has a flat face at the portion of the airbag that contacts the vehicle body or parts and a recess or indentation at the portion that does not contact the vehicle body. For example, the indentation may be on the occupant's side of the airbag.

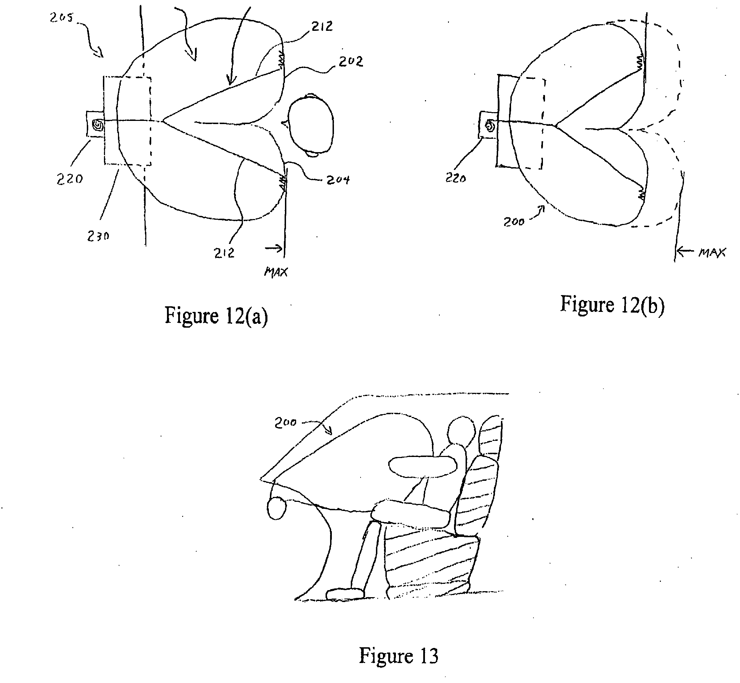

Figure 12(a) shows a top view of an airbag device 205 according to an embodiment that is used to control the shape of an airbag 200. In the example shown in Figure 12(a), a tether 210 is used to restrain the airbag 200 and control the shape of an airbag 200 to a maximum size. When an airbag 200 is deployed, the airbag 200 is restrained by the tether 210 so that the shape and size of the airbag are controlled. For example, the deployment of the airbag 200 may be controlled in response to a crash situation that has been detected.

The tether 210 shown in the example of Figure 12(a) is a single member that is split or divided to attach at the ends of different airbag members or chambers 202, 204. For example, the tether 210 can be split or divided into a separate tether 212 for each member or chamber 202, 204 or the tether 210 may be split into a plurality of strands 212 for each member or chamber 202, 204. The tether can also include separate, multiple tethers. The tether 210 can be attached to a winder, winch, or other tether control device 220 to control the deployed length of the tether 210, and therefore the deployed shape and size of an airbag 200. The tether winding device 220 can be mounted to an airbag retainer 230 that houses the airbag 200 in its folded and/or rolled state. The airbag device 205 can be used to control more than two different airbag sizes in deployment. The tether may comprise fabric, cord, wire or the like. For example, airbag fabric may be used for the tether according to one embodiment.

Figure 12(b) shows a top view of an airbag device 205 that has been deployed to a controlled size. In the example shown in Figure 12(b), the airbag size has been controlled to a minimum size. A minimum size is illustrated with solid lines while a maximum size is illustrated with broken lines. Figure 13 shows a side view of the deployed airbag device 205.

According to an embodiment, the airbag device 205 is used to control the area of vent holes. For example, the airbag device 205 can be used to control the area of vent holes by controlling the size and shape of the airbag 200. In a further embodiment, the airbag device includes a size controlling device, such as the device described above, and a vent hole area controlling device.

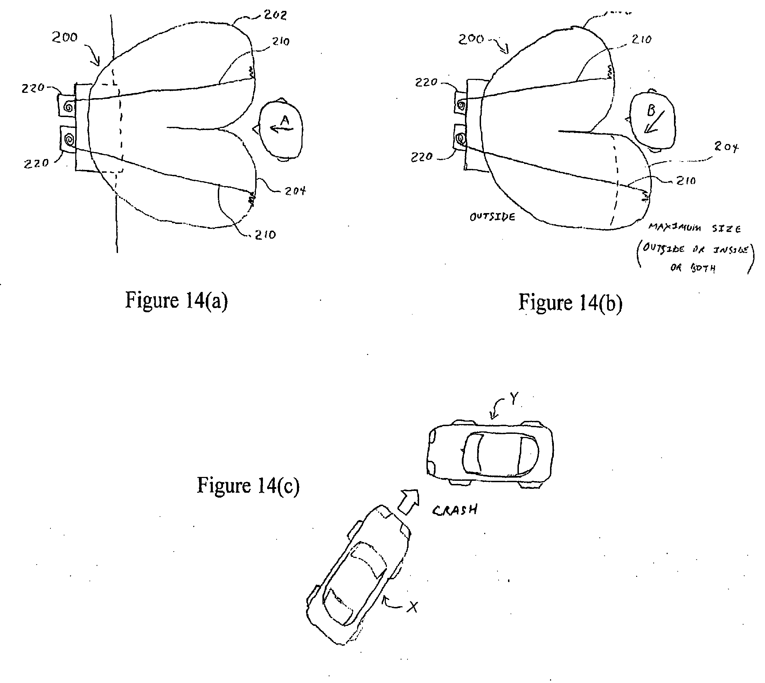

Figure 14(a) shows a top view of an embodiment in which two tethers 210 are used to control the size and shape of an airbag 200. In the example shown in Figure 14(a), two tethers 210 and two corresponding winding devices 220 are used. However, a single winding device 220 may be used to wind two or more tethers 210. A plurality of tethers 210 may be used or a tether 210 may be split at its end to connect to an airbag member or chamber 202, 204. In such configurations, the airbag members or chambers 202, 204 may be controlled independently so that they deploy to different sizes. Arrow A, as shown in the head of an occupant, indicates a direction that the occupant is traveling in.

Figure 14(b) shows a top view of an airbag 200 that has been deployed to a controlled size. In the example shown in Figure 14(b) the inside airbag chamber 202 (the member at the top of the figure closer to the centerline of the vehicle) has been controlled to a size that is relatively smaller than the outside airbag chamber 204 (the chamber at the bottom of the figure closer to the side of the vehicle). In the example shown in Figure 14(b) the outside chamber 204 has been deployed to a maximum size. Such a configuration may be selected in response to a detected crash situation, such as the example shown in Figure 14(c) where a vehicle X will strike an occupant's vehicle Y from an angle. In such a situation, the occupant will travel in the direction shown by Arrow B in Figure 14(b). The airbag 200 may deploy, for example, into a configuration corresponding to the size and shape shown in Figure 14(b) in order reduce or prevent injury to an occupant as a result of the occupant's vehicle being involved in the crash situation shown in Figure 14(c).

In an embodiment, the size and shape of an airbag may be controlled in response to signals from detection devices. For example, sensors such as, for example, seat weight sensors (SWS), cameras, proximity devices, and other crash detection devices known in the art may be used. Signals received from the sensors can be used to control the size and shape of the airbag in relation to the conditions detected by the sensors. For example, a signal received from a seat weight sensor can be used to control the size of an inner airbag chamber and/or or outside airbag chamber to accommodate the size and/or position of a vehicle occupant. In another example, signals received from cameras, proximity devices, and/or other crash detection devices can be used to determine a crash condition, as well as a size and shape of the airbag for accommodation of a vehicle occupant.

In a further embodiment, the airbag device can include a controller that receives signals from sensors, such as, for example, seat weight sensors (SWS), cameras, proximity devices, and other crash detection devices known in the art, and controls the winding devices 220 in response to the signals from the sensors.

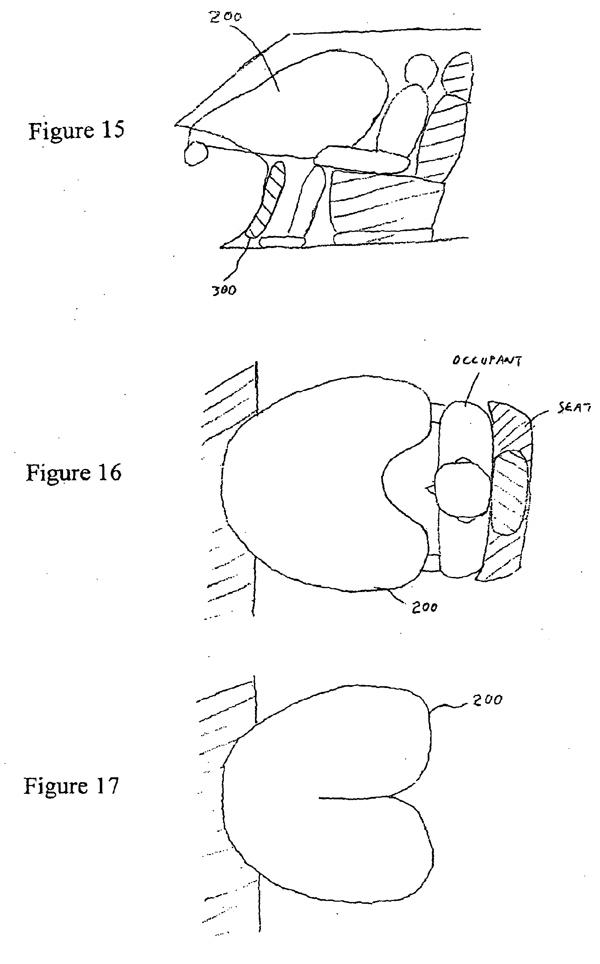

Figure 15 shows an embodiment in which an airbag device 205 according to an embodiment described above is used in combination with a knee bolster and/or a knee bag 300 to restrain an occupant.

In an embodiment, an airbag device 205 according to an embodiment described above is used in combination with a seat belt retractor (e.g., motorized seat belt retractor MSR) to restrain an occupant. In a further embodiment, an airbag device 205 according to an embodiment described above is used in combination with a knee bolster, a knee bag, and MRS to restrain an occupant.

According to an embodiment, an airbag device is adapted to adjust more than two levels of size for each airbag in the direction of an occupant during deployment.

Figures 16 and 17 show top views of examples of airbag sizes and shapes that are capable of being produced with the present invention.

The present invention in its broader aspects is not limited to the specific airbag devices according to the embodiments shown and described herein with reference to Figs. 1 through 17.

As described above, by modifying the configuration of the airbag, an occupant can be protected in a more efficient manner.

## Claims

1. An airbag device (205), comprising:
an airbag (200) including first and second chambers (202, 204), a recess formed in an exterior surface of the airbag between the first and second chambers (202, 204); and
a tether (210, 212);
**characterized in that**
the tether (210,212) includes a first member (210, 212) connected to the airbag (200) in the first chamber (202) and a second member (210,212) connected to the airbag (205) in the second chamber (204); and **in that**
the airbag device comprises a winding device (220) connected to the tether (210, 212), wherein the winding device (220) is arranged to control the size and shape of the airbag (200) when the airbag is in a deployed state.

2. The airbag device of claim 1, wherein the first member (210, 212) and the second member (210, 212) are connected with a third member in a Y-shape, said third member being connected to said winding device (220).

3. The airbag device of claim 1, wherein the winding device (220) includes first and second winding devices.

4. The airbag device of claim 3, wherein the first member (210, 212) is connected to the first winding device (220), and wherein the size and shape of the first chamber (202) is controlled by the first winding device (220); and
wherein the second member (210, 212) is connected to the second winding device (220), wherein the size and shape of the second airbag chamber (204) is controlled by the second winding device (220).

5. The airbag device of any one of claims 1 - 4, wherein the winding device (220) is configured to control the size and shape of the airbag (200) to more than two different airbag sizes when the airbag is in a deployed state.

6. The airbag device of any one of claims 1 - 5, wherein the winding device (220) is configured to control the size and shape of the airbag (200) by controlling the size and shape of the first and second chambers (202, 204).

7. The airbag device of claim 6, wherein the winding device (220) is configured to control the size and shape of the first and second chambers (202, 204) independently.

8. The airbag device of any one of claims 1 - 7, wherein the winding device (220) is configured to control the area of at least one vent hole.

9. The airbag device of claim 8, wherein the winding device (220) is configured to control size and shape of the airbag (200) to more than two different airbag sizes when the airbag is in a deployed state.

10. The airbag device of any one of claims 1 - 9, wherein the winding device (220) is configured to receive an input signal related to an output of a sensor and to control the size and shape of the airbag (200) in response to the sensor output.

11. A vehicle safety system comprising the airbag device (205) of any one of claims 1-10.

12. The system according to claim 11, comprising:
a sensor for sensing a vehicle or occupant characteristic.

13. The system of claim 12, wherein the sensor comprises a seat weight sensor.

14. The system of claim 12 or claim 13, wherein the sensor comprises a camera.

15. The system of any one of claims 12-14, further comprising a controller, wherein the controller receives a signal from the sensor and sends a signal to the winding device (220) to thereby control the length of the tether and the corresponding position of the deployed airbag (200).

16. The system of claim 15, further comprising a knee bolster (300), wherein the deployment of the knee bolster (300) is controlled by the controller.

17. The system of claim 15 or 16, further comprising a motorized seat belt retractor controlled by the controller.

18. The system of any one of claims 13-17, wherein the winding device (220) is configured to allow the airbag (11; 21; 31; 41; 51; 200) to deploy asymmetrically.

19. The system of any one of claims 12-18, wherein the winding device (220) is connected to an airbag retainer.

## Patentansprüche

1. Airbagvorrichtung (205) umfassend:
einen Airbag (200) umfassend eine erste und eine zweite Kammer (202, 204), eine in einer Außenoberfläche des Airbags zwischen der ersten und der zweiten Kammer (202, 204) ausgebildete Vertiefung,
einen Gurt (210, 212), **dadurch gekennzeichnet, dass**
der Gurt (210, 212) ein mit dem Airbag (200) in der ersten Kammer (202) verbundenes erstes Element (210, 212) und ein mit dem Airbag (205) in der zweiten Kammer (204) verbundenes zweites Element (210, 212) umfasst, und dass
die Airbagvorrichtung eine mit dem Gurt (210, 212) verbundene Aufwickelvorrichtung (220) umfasst, wobei die Aufwickelvorrichtung (220) ausgestaltet ist, die Größe und Form des Airbags (200) zu steuern, wenn der Airbag in einem eingesetzten Zustand ist.

2. Airbagvorrichtung nach Anspruch 1, wobei das erste Element (210, 212) und das zweite Element (210, 212) in einer Y-Form mit einem dritten Element verbunden sind, wobei das dritte Element mit der Aufwickelvorrichtung (220) verbunden ist.

3. Airbagvorrichtung nach Anspruch 1, wobei die Aufwickelvorrichtung (220) eine erste und eine zweite Aufwickelvorrichtung umfasst.

4. Airbagvorrichtung nach Anspruch 3, wobei das erste Element (210, 212) mit der ersten Aufwickelvorrichtung (220) verbunden ist, und wobei die Größe und Form der ersten Kammer (202) durch die erste Aufwickelvorrichtung (220) gesteuert wird, und
wobei das zweite Element (210, 212) mit der zweiten Aufwickelvorrichtung (220) verbunden ist, wobei die Größe und Form der zweiten Airbagkammer (204) durch die zweite Aufwickelvorrichtung (220) gesteuert wird.

5. Airbagvorrichtung nach einem der Ansprüche 1-4, wobei die Aufwickelvorrichtung (220) ausgestaltet ist, die Größe und Form des Airbags (200) auf zwei verschiedene Airbaggrößen zu steuern, wenn der Airbag in einem eingesetzten Zustand ist.

6. Airbagvorrichtung nach einem der Ansprüche 1-5, wobei die Aufwickelvorrichtung (220) ausgestaltet ist, die Größe und Form des Airbags (200) durch Steuern der Größe und Form der ersten und zweiten Kammer (202, 204) zu steuern.

7. Airbagvorrichtung nach Anspruch 6, wobei die Aufwickelvorrichtung (220) ausgestaltet ist, die Größe und Form der ersten und zweiten Kammer (202, 204) unabhängig voneinander zu steuern.

8. Airbagvorrichtung nach einem der Ansprüche 1-7, wobei die Aufwickelvorrichtung (220) ausgestaltet ist, die Fläche mindestens eines Lüftungslochs zu steuern.

9. Airbagvorrichtung nach Anspruch 8, wobei die Aufwickelvorrichtung (220) ausgestaltet ist, die Größe und Form des Airbags (200) auf mehr als zwei unterschiedliche Airbaggrößen zu steuern, wenn der Airbag in einem eingesetzten Zustand ist.

10. Airbagvorrichtung nach einem der Ansprüche 1-9, wobei die Aufwickelvorrichtung (220) ausgestaltet ist, ein mit einer Ausgabe eines Sensors verknüpftes Eingangssignal zu empfangen und die Größe und Form des Airbags (200) in Abhängigkeit von der Sensorausgabe zu steuern.

11. Fahrzeugsicherheitssystem umfassend die Airbagvorrichtung (205) nach einem der Ansprüche 1-10.

12. System nach Anspruch 11, umfassend:
einen Sensor zum Erfassen einer Fahrzeug- oder Insasseneigenschaft.

13. System nach Anspruch 12, wobei der Sensor einen Sitzgewichtssensor umfasst.

14. System nach Anspruch 12 oder 13, wobei der Sensor eine Kamera umfasst.

15. System nach einem der Ansprüche 12-14, weiter umfassend eine Steuerung, wobei die Steuerung ein Signal von dem Sensor empfängt und ein Signal zu der Aufwickelvorrichtung (220) sendet, um damit die Länge des Gurtes und die entsprechende Position des eingesetzten Airbags (200) zu steuern.

16. System nach Anspruch 15, weiterhin umfassend ein Kniepolster (300), wobei der Einsatz des Kniepolsters (300) durch die Steuerung gesteuert wird.

17. System nach Anspruch 15 oder 16, weiterhin umfassend einen von der Steuerung gesteuerten motorisierten Sicherheitsgurtaufwickler.

18. System nach einem der Ansprüche 13-17, wobei die Aufwickelvorrichtung (220) ausgestaltet ist, es dem Airbag (11; 21; 31; 41; 51; 200) zu gestatten, sich asymmetrisch zu entfalten.

19. System nach einem der Ansprüche 12-18, wobei die Aufwickelvorrichtung (220) mit einem Airbagbehälter verbunden ist.

## Revendications

1. Dispositif de coussin de sécurité gonflable (205), comprenant :
un coussin de sécurité gonflable (200), comprenant des première et deuxième chambres (202, 204), une cavité, formée dans une surface extérieure du coussin de sécurité gonflable, entre les première et deuxième chambres (202, 204) ; et
une longe (210, 212) ;
**caractérisé en ce que**
la longe (210, 212) comprend un premier organe (210, 212) relié au coussin de sécurité gonflable (200) dans la première chambre (202), et un deuxième organe (210, 212) relié au coussin de sécurité gonflable (205) dans la première chambre (204) ; et **en ce que**
le coussin de sécurité gonflable comprend un dispositif d'enroulement (220), relié à la longe (210, 212), dans lequel le dispositif d'enroulement (220) est agencé pour commander la taille et la forme du coussin de sécurité gonflable (200) lorsque le coussin de sécurité gonflable se trouve à l'état déployé.

2. Dispositif de coussin de sécurité gonflable selon la revendication 1, dans lequel le premier organe (210, 212) et le deuxième organe (210, 212) sont reliés à un troisième organe en forme de Y, ledit troisième organe étant relié audit dispositif d'enroulement (220).

3. Dispositif de coussin de sécurité gonflable selon la revendication 1, dans lequel le dispositif d'enroulement (220) comprend des premiers et deuxième dispositifs d'enroulement.

4. Dispositif de coussin de sécurité gonflable selon la revendication 3, dans lequel le premier organe (210, 212) est relié au premier dispositif d'enroulement (220), et dans lequel la taille et la forme de la première chambre (202) sont commandées par le premier dispositif d'enroulement (220) ; et
dans lequel le deuxième organe (210, 212) est relié au deuxième dispositif d'enroulement (220), dans lequel la taille et la forme de la deuxième chambre à coussin de sécurité gonflable (204) sont commandées par le deuxième dispositif d'enroulement (220).

5. Dispositif de coussin de sécurité gonflable selon l'une quelconque des revendications 1 à 4, dans lequel le dispositif d'enroulement (220) est configuré pour commander la taille et la forme du coussin de sécurité gonflable (200), à plus de deux tailles différentes de coussin de sécurité gonflable, lorsque le coussin de sécurité gonflable se trouve dans un état déployé.

6. Dispositif de coussin de sécurité gonflable selon l'une quelconque des revendications 1 à 5, dans lequel le dispositif d'enroulement (220) est configuré pour commander la taille et la forme du coussin de sécurité gonflable (200), en commandant la taille et la forme des première et deuxième chambres (202, 204).

7. Dispositif de coussin de sécurité gonflable selon la revendication 6, dans lequel le dispositif d'enroulement (220) est configuré pour commander la taille et la forme des première et deuxième chambres (202, 204), de façon indépendante.

8. Dispositif de coussin de sécurité gonflable selon l'une quelconque des revendications 1 à 7, dans lequel le dispositif d'enroulement (220) est configuré pour commander l'aire d'au moins un trou d'évent.

9. Dispositif de coussin de sécurité gonflable selon la revendication 8, dans lequel le dispositif d'enroulement (220) est configuré pour commander la taille et la forme du coussin de sécurité gonflable (200), à plus de deux tailles différentes de coussin de sécurité gonflable, lorsque le coussin de sécurité gonflable se trouve dans un état déployé.

10. Dispositif de coussin de sécurité gonflable selon l'une quelconque des revendications 1 à 9, dans lequel le dispositif d'enroulement (220) est configuré pour recevoir un signal d'entrée, lié à un signal de sortie d'un capteur, et pour commander la taille et la forme du coussin de sécurité gonflable (200), en réponse au signal de sortie du capteur.

11. Système de sécurité pour véhicule, comprenant le dispositif de coussin de sécurité gonflable (205) selon l'une quelconque des revendications 1 à 10.

12. Système selon la revendication 11, comprenant :
un capteur, pour appréhender une caractéristique d'un véhicule ou d'un occupant.

13. Système selon la revendication 12, dans lequel le capteur comprend un capteur de poids appliqué à un siège.

14. Système selon la revendication 12 ou 13, dans lequel le capteur comprend une caméra.

15. Système selon l'une quelconque des revendication 12 à 14, comprenant un contrôleur, dans lequel le contrôleur reçoit un signal provenant du capteur et envoie un signal au dispositif d'enroulement (220), de manière à commander de cette manière la longueur de la longe et la position correspondante du coussin de sécurité gonflable (200) déployé.

16. Système selon la revendication 15, comprenant en outre un coussin pour les genoux (300), dans lequel le déploiement du coussin pour les genoux (300) est commandé par le contrôleur.

17. Système selon la revendication 15 ou 16, comprenant en outre un rétracteur motorisé de ceinture de siège, commandé par le contrôleur.

18. Système selon l'une quelconque des revendication 13 à 17, dans lequel le dispositif d'enroulement (220) est configuré pour permettre au coussin de sécurité gonflable (11 ; 21 ; 31 ; 41 ; 51 ; 200) de se déployer de façon asymétrique.

19. Système selon l'une quelconque des revendication 12 à 18, dans lequel dispositif d'enroulement (220) est connecté à un organe de retenue de coussin de sécurité gonflable.
